# EUROPÄISCHE PATENTSCHRIFT

(11) **EP 2 452 553 B1**
(45) Veröffentlichungstag und Bekanntmachung des Hinweises auf die Patenterteilung: **23.07.2014**
(21) Anmeldenummer: 11007454.9
(22) Anmeldetag: 14.09.2011
(51) Int. Cl.: A01F 29/00, B02C 13/282, B02C 13/09

(54) **Maschinenanlage zur Aufbereitung von Feldfrüchten**
Machine arrangement for processing field crops
Installation de machine pour le traitement de produits agricoles

(30) Priorität: 11.11.2010 DE 102010060486
(43) Veröffentlichungstag der Anmeldung: 16.05.2012
(73) Patentinhaber: Putsch GmbH & Co. KG, 58095 Hagen (DE)
(72) Erfinder: Lücke, Fred, 27404 Seedorf (DE); Rosenau, Volkmar, 27419 Gross Meckelsen (DE)
(74) Vertreter: Köchling, Conrad-Joachim

(56) Entgegenhaltungen:
- EP-A2- 0 126 872
- WO-A2-2008/124583
- DE-A1- 3 313 928
- DE-A1- 3 321 449
- DE-C- 851 143
- DE-C- 962 123
- US-A- 1 645 770
- US-A- 3 217 765

## Beschreibung

Die Erfindung betrifft eine Maschinenanlage zur Aufbereitung von Feldfrüchten, insbesondere Rüben. Bei der Verarbeitung von Feldfrüchten, insbesondere Rüben, besteht das Bedürfnis, solche Rüben derart zu bearbeiten, dass ein Substrat für die Bioenergieerzeugung erzeugt wird. Die entsprechende Zerkleinerung von Feldfrüchten auf eine für die Bioenergieerzeugung erforderliche Größe ist in den bisherigen Maschinenanlagen nicht möglich. Um hier eine Lösung zu schaffen, schlägt die Erfindung eine Maschinenanlage zur Aufbereitung von Feldfrüchten, insbesondere Rüben, bestehend aus einem Maschinengehäuse mit in Arbeitslage oberer Befüllöffnung und untenliegender Abgabeöffnung, einer im Maschinengehäuse drehbar angeordneten, angetriebenen Brechertrommel mit einer Vielzahl von vom Trommelmantel abragenden Mitnehmern , einem zwischen Gehäuse und Trommelmantel gebildeten engen Spalt, in den die gebrochenen Feldfrüchte mittels der Mitnehmer gepresst und zerdrückt werden, wobei in Drehrichtung der Brechertrommel hinter dem Spalt die Abgabeöffnung vorgesehen ist, sowie mit einer zweiten Maschine, die an die Abgabeöffnung anschließend angeordnet ist, wobei die zweite Maschine zum Zerkleinern der von der ersten Maschine abgegebenen Feldfruchtstücke dient, wozu sie ein Maschinengehäuse mit einer oberen Befüllöffnung und einer in Arbeitslage untenliegenden Abgabeöffnung aufweist, eine im Gehäuse drehbar angeordnete angetriebene Trommel aufweist, die eine Vielzahl von radial von ihrem Mantel abragenden Schlagmessern trägt, die mit einem an einer Innenwandung des Gehäuses angeordneten kammartigen Gegenmesser eine Feldfruchtzerkleinerungseinheit bilden, wobei in Drehrichtung der Trommel dem Gegenmesser folgend die Abgabeöffnung vorgesehen ist, vor.

Eine solche Maschinenanlage ist zur Feinzerkleinerung von Rüben, die als Substrat in Bioenergieanlagen eingesetzt werden, bestimmt. Die Maschinenanlage ist modular aufgebaut und besteht aus zwei hintereinander geschalteten Einzelmaschinen. Bei speziellen Anforderungen können diese beiden Einzelmaschinen auch als Einzelmaschinen betrieben werden.

Die erfindungsgemäß vorgesehene erste Maschine ist in Bearbeitungsrichtung der aufzubereitenden Feldfrüchte über der anderen zweiten Maschine angeordnet. Die in Arbeitsrichtung obere erste Maschine dient zum Brechen der Rüben. Dies heißt, dass entsprechend den Anforderungen die Rüben in größere Stücke gebrochen werden, beispielsweise in vier bis sechs Stücke. Eine solche Arbeitsweise wird beispielsweise angewandt, wenn die Rüben zusammen mit Mais in ein Fahrsilo eingebracht werden.

Die in größere Stücke gebrochenen Feldfrüchte, insbesondere Rüben, werden aus der Abgabeöffnung der ersten Maschine in die obere Befüllöffnung der zweiten Maschine eingetragen. Beide Maschinen bestehen jeweils aus einem stabilen Blechgehäuse, in dem die entsprechenden Aggregate angeordnet sind. Im Maschinengehäuse der ersten Maschine ist eine vorzugsweise langsam laufende Brechertrommel eingebaut. Die Wellenenden der Brechertrommel können in außenliegenden stabilen Stehlagern gelagert werden. Der Antrieb erfolgt über einen Elektromotor, der an der Außenseite des Gehäuses angebaut ist und kinematisch mit einem Wellenende zum Antrieb der Brechertrommel gekoppelt ist. Die Brechertrommel weist eine Vielzahl von ihrem Trommelmantel abragende Mitnehmer auf. Diese Mitnehmer bewirken ein Mitnehmen der Feldfrüchte sowie evtl. noch vorhandener Steine. In die erste Maschine werden die entsprechenden Feldfrüchte und dergleichen eingebracht, wobei mittels der Brechertrommel und der daran befindlichen Mitnehmer die Rüben oder dergleichen durch einen engen Wandspalt zwischen Gehäuse und Brechertrommel eingezogen werden. Hierdurch werden die Feldfrüchte, insbesondere Rüben, zerdrückt und brechen in groben Stücken auseinander.

Die in Arbeitsrichtung der ersten Maschine folgend angeordnete zweite Maschine dient zur Feinzerkleinerung der Feldfrüchte, insbesondere Rüben. Sie kann aber auch als Einzelstufe verwendet werden, wenn z.B. eine grobe Partikelstruktur benötigt wird. Auch die zweite Maschine weist ein stabiles Blechgehäuse auf, in dem eine vorzugsweise schnell laufende Trommel angeordnet ist. Die Wellenenden der Trommel sind wiederum außen in stabilen Lagern gelagert. Auch hierbei kann der Antrieb der Trommel über einen Elektromotor erfolgen, der mit einem Wellenende der Trommel kinematisch gekoppelt ist.

Auf dem Trommelumfang sind eine Vielzahl von radial abragenden Schlagmessern zur Zerkleinerung der Rüben angeordnet. An der Gehäusewand ist auf der Innenseite ein kammartiges Gegenmesser befestigt, welches die gleiche Teilung wie die Schlagmesser der Trommel hat. Die Zerkleinerung der Feldfrüchte, insbesondere Rüben, erfolgt dadurch, dass diese von den Schlagmessern erfasst und in Richtung des kammartigen Gegenmessers gedrückt werden. Dabei reißen die Schlagmesser Stücke aus den Rüben oder dergleichen Feldfrüchten aus und drücken diese durch die Öffnung in den Kamm und durch den Kamm.

Aus der DE 962123 C ist eine Zerkleinerungsvorrichtung zur Aufbereitung von Feldfrüchten zu Substrat, mit einer Maschine zum Brechen von Feldfrüchten und unten liegender Abgabeöffnung bekannt.

Vorzugsweise sind die Maschinengehäuse beider Maschinen miteinander verschraubt und stellen einen modularen Aufbau dar. Beispielsweise zum Zwecke der Wartung oder Reparatur sind die beiden Maschinengehäuse der beiden Maschinen trennbar, damit die Inneneinbauteile beider Maschinen schnell und ohne großen Aufwand erreichbar sind und bei Bedarf auch problemlos gewechselt werden können.

Vorzugsweise ist demnach vorgesehen, dass die erste Maschine auf die zweite Maschine aufgesetzt und mit dieser zu einer zweistufigen Funktionseinheit verbunden ist.

Des Weiteren ist bevorzugt vorgesehen, dass die Brechertrommel der ersten Maschine mittels eines Elektromotors über ein Stirnradgetriebe direkt angetriebenen ist, das mit einem Wellenende einer Antriebswelle der Brechertrommel in Eingriff ist.

Durch die Ausbildung eines Direktantriebes, bei dem ein Elektromotor über ein Stirnradgetriebe mit dem Wellenende eine Antriebswelle der Brechertrommel in Eingriff ist, wird ein langsam laufender Antrieb für die Brechertrommel zur Verfügung gestellt, der ein hohes Drehmoment aufbringen kann.

Vorzugsweise ist zudem vorgesehen, dass die Mitnehmer starr auf den Trommelmantel wechselbar aufgeschraubt sind.

Diese Mitnehmer sind starr an der Brechertrommel angeschraubt und wechselbar, sofern einzelne Mitnehmer nicht mehr funktionstüchtig sind.

Besonders bevorzugt ist auch vorgesehen, dass zur Bildung des engen Spaltes an der Gehäusewandung ein leistenartiger Formkörper mit dachartiger Außenkontur fixiert oder ausgebildet ist, dessen eine Dachfläche eine zum Trommelmantel zielende Führung für Feldfrüchte bildet und dessen andere Dachfläche von der Brechertrommel weg geneigt ist, wobei der First der Dachflächen den Spalt zwischen Trommelmantel und Formkörper bildet.

Durch diese Ausbildung wird das Eintragen der Feldfrüchte, insbesondere Rübenteile, in den engen Spalt und das Abtragen der zerquetschten Feldfrüchte gefördert.

Des Weiteren ist bevorzugt vorgesehen, dass an einem Bodenbereich des Gehäuses in Drehrichtung der Brechertrommel dem Spalt folgend eine Abstreifeinrichtung zum Abstreifen von Feldfruchtmasse vom Trommelmantel angeordnet ist.

Durch diese Abstreifeinrichtung werden Bruchstücke von Feldfrüchten vom Trommelmantel abgestriffen, so dass sie aus der Abgabeöffnung der Maschine abtransportiert werden können bzw. herausfallen können.

Bevorzugt ist dabei vorgesehen, dass die Abstreifeinrichtung ein vorzugsweise schwimmend gelagerter Kamm ist, dessen Teilung der Anordnung der Mitnehmer auf dem Trommelmantel angepasst ist.

Durch die schwimmende Lagerung des Kammes ist erreicht, dass dieser bei Hindernissen, die sich am Trommelmantel festgesetzt haben, ausweichen kann.

Zudem ist bevorzugt vorgesehen, dass der elektrische Antrieb der Brechertrommel mit einer Schalteinrichtung gekoppelt ist, die bei zu hoher Stromaufnahme des Antriebsmotors den Motor auf Drehrichtungsumkehr schaltet, vorzugsweise mit einem Zeitschalter gekoppelt, so dass die Drehrichtungsumkehr zeitlich begrenzt ist und nach Zeitablauf in normale Drehrichtung zurückgeschaltet wird.

Falls beim Eintragen der Feldfrüchte, insbesondere Rüben, Steine mit eingetragen werden, die sich dann in der Maschine befinden, können solche Steine beim Zerkleinern in dem Spalt zwischen Trommel und Gehäuse eingeklemmt werden. In diesem Falle wird durch die Steine ein Hindernis gebildet, welches das Drehen der Brechertrommel behindert. Hierdurch steigt die Stromaufnahme des Antriebsmotors stark an. Durch eine entsprechende elektronische Überwachungseinrichtung wird dieser Stromanstieg erfasst und zu einem Schaltvorgang genutzt, mittels dessen der Motor auf Drehsrichtungsumkehr geschaltet wird. Die Brechertrommel dreht sich also entgegen der eigentlichen Arbeitsrichtung, so dass entsprechende Steine aus dem Spalt ausgetragen und zu einer entgegenliegenden Seite abtransportiert werden können. Nach ausreichendem Ablauf einer Drehrichtungsumkehr wird wieder auf normale Drehrichtung umgeschaltet, um weiterhin Feldfrüchte und dergleichen zerkleinern zu können.

Bevorzugt ist dabei vorgesehen, dass am Gehäuse etwa gegenüber dem Spalt eine Pendelklappe vorgesehen ist, aus der bei Drehrichtungsumkehr Steine oder dergleichen Störteile auswerfbar sind.

Die Pendelklappe verschließt in normaler Betriebsweise eine Öffnung des Gehäuses. Bei Umkehr der Drehrichtung werden Steine gegen die Pendelklappe gedrückt und durch Öffnen der Pendelklappe ausgeworfen, so dass sie für den weiteren Betriebsgang nicht mehr störend sind. Die Pendelklappe dient gleichzeitig als Eingreifschutz, da sie in normale Betriebslage geschlossen ist und die entsprechende Gehäuseöffnung schließt.

Vorzugsweise ist zudem vorgesehen, dass die Trommel der zweiten Maschine schnelldrehend über einen Motor mit Keilriementrieb angetrieben ist.

Die Trommel der zweiten Maschine ist schnelldrehend über einen Elektromotor mit Keilriemenantrieb angetrieben, so dass das zu übertragende Drehmoment nicht so hoch ist, wie beim Antrieb der ersten Maschine, jedoch ein schnellerer Arbeitsablauf erreicht wird.

Bevorzugt ist ferner vorgesehen, dass die Schlagmesser jeweils in Reihen auf der Trommel angeordnet sind, wobei sie trommelseitig jeweils durch einen in eine Bohrung der Trommel eingesetzten Rundbolzen gehalten sind.

Auf diese Weise ist die Montage und Anordnung der Schlagmesser vereinfacht, da sie zunächst an entsprechender Position auf die Trommel aufgesetzt und an der Trommel verankert werden können, wobei ein in die Trommel hineinragendes Ende der Schlagmesser gelocht ist und zum Durchschieben eines Rundbolzens dient, der durch eine Bohrung der Trommel geführt ist, so dass in der Endmontagelage auf dem Rundbolzen eine ganze Anzahl von Schlagmessern gehalten sind.

Bevorzugt ist ferner vorgesehen, dass das kammartige Gegenmesser durch einen Scherbolzen am Maschinengehäuse gehalten ist, der vorzugsweise so eingestellt ist, dass er bei einem Hindernis eher bricht als die Schlagmesser und/oder das Gegenmesser.

Das kammartige Gegenmesser, welches die gleiche Teilung wie die Schlagmesser der Trommel hat, ist durch einen Scherbolzen am Maschinengehäuse gehalten. Hierdurch wird ein Messerbruch verhindert, wenn sich ein Fremdkörper in dem zugeführten Material von Feldfrüchten befindet. Im Extremfall bricht dann der Scherbolzen, nicht aber das Gegenmesser. Der Scherbolzen kann dann bei Stillstand der Maschine ausgewechselt werden und das kammartige Gegenmesser wieder ordnungsgemäß positioniert und gehalten werden. Ein Ausführungsbeispiel der Maschinenanlage ist in der Zeichnung dargestellt und im Folgenden näher beschrieben.

Es zeigt:
- Figur 1: eine Maschinenanlage in Schrägansicht von schräg oben gesehen;
- Figur 2: die Maschinenanlage in einem Mittellängsschnitt gesehen;

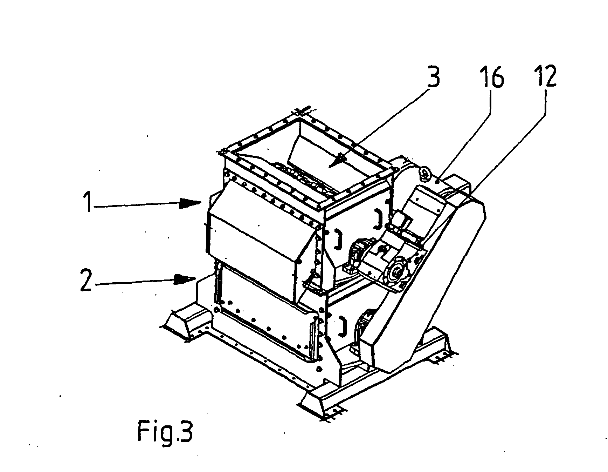

- Figur 3: die Maschinenanlage in einer ähnlichen Ansicht wie Figur 1, allerdings um die Mittelachse gedreht.

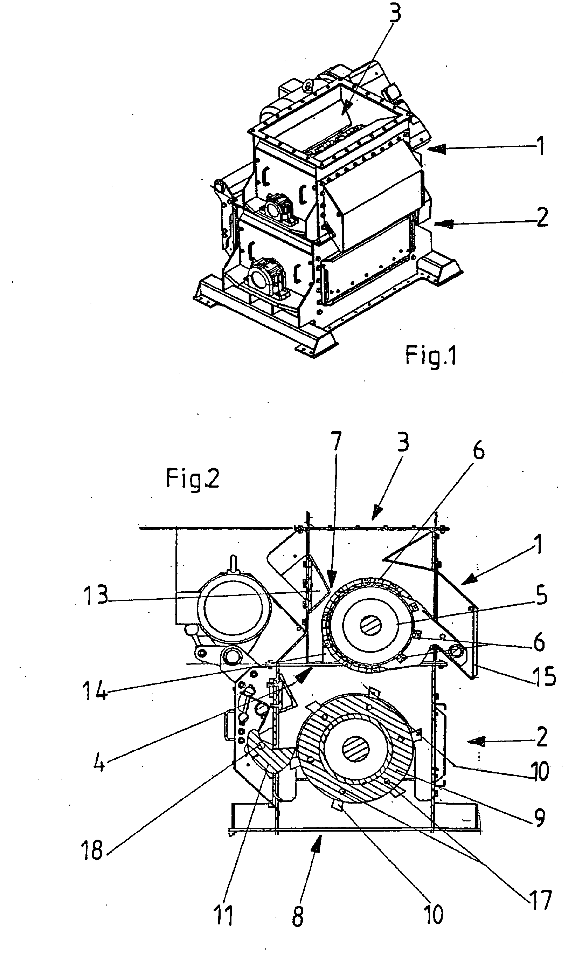

In der Zeichnung ist eine Maschinenanlage zur Aufbereitung von Rüben zu Substrat gezeigt. Diese Maschinenanlage weist eine erste Maschine 1 zum Brechen von Feldfrüchten, insbesondere Rüben auf, sowie eine zweite Maschine 2, die an die erste Maschine 1 angeschlossen ist. Die erste Maschine 1 dient zum Brechen von Feldfrüchten, insbesondere Rüben. Sie besteht aus einem Maschinengehäuse aus Blech, welches eine in Arbeitslage obere Befüllöffnung 3 und eine unten liegende Abgabeöffnung 4 aufweist. Im Maschinengehäuse ist eine Brechertrommel 5 drehbar angeordnet, die in geeigneter Weise motorisch angetrieben ist. Die Brechertrommel weist auf ihrem Trommelmantel eine Vielzahl von radial abragenden Mitnehmern 6 auf. Die normale Arbeitsdrehrichtung der Trommel ist in der Darstellung gemäß Figur 2 entgegen dem Uhrzeigersinn. Zwischen dem Gehäuse und dem Trommelmantel ist ein enger Spalt 7 gebildet, in den die gebrochenen Feldfrüchte mittels der Mitnehmer 6 gepresst und zerdrückt werden. In Drehrichtung der Trommel 5 hinter dem Spalt 7 ist die Abgabeöffnung 4 vorgesehen.

Die zweite Maschine 2 ist im Ausführungsbeispiel unmittelbar unter der ersten Maschine 1 angeordnet und mit dieser verschraubt. Gegebenenfalls könnten aber auch beide Maschinen als separate Einheit betrieben werden. Die zweite Maschine 2 dient zum Zerkleinern der von der ersten Maschine 1 abgegebenen Feldfruchtstücke. Dazu weist diese zweite Maschine 2 ein Maschinengehäuse mit einer oberen Befüllöffnung auf, die unterhalb der Abgabeöffnung 4 der ersten Maschine 1 angeordnet ist. Des Weiteren weist das Maschinengehäuse eine in Arbeitslage untenliegende Abgabeöffnung 8 für Feldfruchtmasse auf. In dem Gehäuse ist eine Trommel 9 drehbar angeordnet, die durch geeignete Mittel angetrieben ist. Diese weist eine Vielzahl von radial von ihrem Mantel abragenden Schlagmessern 10 auf. Die Schlagmesser 10 arbeiten mit einem an einer Innenwandung des Gehäuses angeordneten kammartigen Gegenmesser 11 zusammen und bilden mit diesem eine Feldfruchtzerkleinerungseinheit. Die Drehrichtung der Trommel 9 ist auch hierbei in der normalen Arbeitslage entgegen dem Uhrzeigersinn. In Drehrichtung der Trommel 9 dem Gegenmesser 11 folgend ist die Abgabeöffnung 8 vorgesehen. Wie aus den Darstellungen ersichtlich, ist die erste Maschine 1 auf die zweite Maschine 2 aufgesetzt und mit dieser zu einer zweistufigen Funktionseinheit verbunden.

Die Brechertrommel 5 der ersten Maschine 1 ist mittels eines Elektromotors 12 über ein Stirnradgetriebe direkt angetrieben, wobei der Antrieb an einem Wellenende der Antriebswelle der Brechertrommel 5 erfolgt.

Die Mitnehmer 6 sind starr auf dem Trommelmantel aufgeschraubt und damit zum Zwecke des Ersatzes wechselbar.

Zur Bildung des engen Spaltes 7 ist an der Gehäusewandung ein leistenartiger Formkörper 13 mit dachartiger Außenkontur fixiert oder ausgebildet. Die eine Dachfläche des Formkörpers 13 ist zum Trommelmantel hinzielend gerichtet und bildet eine Führung für die Feldfrüchte zur Trommel bzw. zu den Mitnehmern 6. Die andere Dachfläche ist von der Trommel weg geneigt, wobei der First der Dachflächen den Spalt 7 zwischen Trommelmantel und Formkörper 13 bildet. An einem Bodenbereich des Gehäuses in Drehrichtung der Brechertrommel 5 dem Spalt 7 folgende ist eine Abstreifeinrichtung 14 vorgesehen, die zum Abstreifen von Feldfruchtmasse vom Trommelmantel dient. Diese Abstreifeinrichtung 14 ist vorzugsweise ein schwimmend gelagerter Kamm, dessen Teilung der Anordnung der Mitnehmer 6 auf dem Trommelmantel angepasst ist.

Am Gehäuse ist etwa gegenüber dem Spalt 7 eine Pendelklappe 15 vorgesehen, die in der Zeichnungsfigur 2 oben pendelnd aufgehängt ist. Aus dieser sind bei Drehrichtungsumkehr der Brechertrommel 5 beispielsweise Steine oder dergleichen auswerfbar.

Die Trommel 9 der zweiten Maschine 2 ist schnelldrehend über einen Motor 16 mit Riementrieb angetrieben. Der Antrieb erfolgt über einen Wellenzapfen der Trommel 9.

Die Schlagmesser 10 sind jeweils in Reihen auf der Trommel 9 angeordnet, wobei sie trommelseitig jeweils durch einen in eine Bohrung der Trommel 9 eingesetzten Rundbolzen 17 gehalten sind.

Das kammartige Gegenmesser 11 ist durch einen Scherbolzen 18 am Maschinengehäuse befestigt. Dieser ist so bemessen, dass er bei einem Hindernis eher bricht als die Messer.

Die Maschinenanlage ist insbesondere durch ihren modularen Aufbau auch dazu geeignet und bestimmt, bei Kleinverarbeitern eingesetzt zu werden, die vor Ort Rüben zu Substrat für die Bioenergieerzeugung zerteilen können und nachfolgend der Bioenergieerzeugung zuführen können.

Unter Bioenergieerzeugung wird vor allem die Erzeugung von Biogas oder Bioethanol verstanden.

Die Erfindung ist nicht auf das Ausführungsbeispiel beschränkt, sondern im Rahmen der anhängenden Patentansprüche vielfach variabel.

## Patentansprüche

1. Maschinenanlage zur Aufbereitung von Feldfrüchten, insbesondere Rüben, zu Substrat, vorzugsweise für die Bioenergieerzeugung mit einer ersten Maschine (1) zum Brechen von Feldfrüchten, insbesondere Rüben, bestehend aus einem Maschinengehäuse mit in Arbeitslage oberer Befüllöffnung (3) und untenliegender Abgabeöffnung (4), einer im Maschinengehäuse drehbar angeordneten, angetriebenen Brechertrommel (5) mit einer Vielzahl von vom Trommelmantel abragenden Mitnehmern (6), einem zwischen Gehäuse und Trommelmantel gebildeten engen Spalt (7), in den die gebrochenen Feldfrüchte mittels der Mitnehmer (6) gepresst und zerdrückt werden, wobei in Drehrichtung der Brechertrommel (5) hinter dem Spalt (7) die Abgabeöffnung (4) vorgesehen ist, **gekennzeichnet durch** eine zweite Maschine (2), die an die Abgabeöffnung (4) anschließend angeordnet ist, wobei die zweite Maschine (2) zum Zerkleinern der von der ersten Maschine (1) abgegebenen Feldfruchtstücke dient, wozu sie ein Maschinengehäuse mit einer oberen Befüllöffnung und einer in Arbeitslage untenliegenden Abgabeöffnung (8) aufweist, eine im Gehäuse drehbar angeordnete angetriebene Trommel (9) aufweist, die eine Vielzahl von radial von ihrem Mantel abragenden Schlagmessern (10) trägt, die mit einem an einer Innenwandung des Gehäuses angeordneten kammartigen Gegenmesser (11) eine Feldfruchtzerkleinerungseinheit bilden, wobei in Drehrichtung der Trommel (9) dem Gegenmesser (11) folgend die Abgabeöffnung (8) vorgesehen ist.

2. Maschinenanlage nach Anspruch 1,
**dadurch gekennzeichnet, dass** die erste Maschine (1) auf die zweite Maschine (2) aufgesetzt und mit dieser zu einer zweistufigen Funktionseinheit verbunden ist.

3. Maschinenanlage nach Anspruch 1 oder 2,
**dadurch gekennzeichnet, dass** die Brechertrommel (5) der ersten Maschine (1) mittels eines Elektromotors (12) über ein Stirnradgetriebe direkt angetriebenen ist, das mit einem Wellenende einer Antriebswelle der Brechertrommel (5) in Eingriff ist.

4. Maschinenanlage nach einem der Ansprüche 1 bis 3,
**dadurch gekennzeichnet, dass** die Mitnehmer (6) starr auf den Trommelmantel wechselbar aufgeschraubt sind.

5. Maschinenanlage nach einem der Ansprüche 1 bis 4,
**dadurch gekennzeichnet, dass** zur Bildung des engen Spaltes (7) an der Gehäusewandung ein leistenartiger Formkörper (13) mit dachartiger Außenkontur fixiert oder ausgebildet ist, dessen eine Dachfläche eine zum Trommelmantel zielende Führung für Feldfrüchte bildet und dessen andere Dachfläche von der Brechertrommel (5) weg geneigt ist, wobei der First der Dachflächen den Spalt (7) zwischen Trommelmantel und Formkörper (13) bildet.

6. Maschinenanlage nach einem der Ansprüche 1 bis 5,
**dadurch gekennzeichnet, dass** an einem Bodenbereich des Gehäuses in Drehrichtung der Brechertrommel (5) dem Spalt (7) folgend eine Abstreifeinrichtung (14) zum Abstreifen von Feldfruchtmasse vom Trommelmantel angeordnet ist.

7. Maschinenanlage nach Anspruch 6,
**dadurch gekennzeichnet, dass** die Abstreifeinrichtung (14) ein vorzugsweise schwimmend gelagerter Kamm ist, dessen Teilung der Anordnung der Mitnehmer (6) auf dem Trommelmantel angepasst ist.

8. Maschinenanlage nach einem der Ansprüche 1 bis 7,
**dadurch gekennzeichnet, dass** der elektrische Antrieb der Brechertrommel (5) mit einer Schalteinrichtung gekoppelt ist, die bei zu hoher Stromaufnahme des Antriebsmotors (12) den Motor auf Drehrichtungsumkehr schaltet, vorzugsweise mit einem Zeitschalter gekoppelt, so dass die Drehrichtungsumkehr zeitlich begrenzt ist und nach Zeitablauf in normale Drehrichtung zurückgeschaltet wird.

9. Maschinenanlage nach einem der Ansprüche 1 bis 8,
**dadurch gekennzeichnet, dass** am Gehäuse etwa gegenüber dem Spalt (7) eine Pendelklappe (15) vorgesehen ist, aus der bei Drehrichtungsumkehr Steine oder dergleichen Störteile auswerfbar sind.

10. Maschinenanlage nach einem der Ansprüche 1 bis 9,
**dadurch gekennzeichnet, dass** die Trommel (9) der zweiten Maschine (2) schnelldrehend über einen Motor (16) mit Keilriementrieb angetrieben ist.

11. Maschinenanlage nach einem der Ansprüche 1 bis 10,
**dadurch gekennzeichnet, dass** die Schlagmesser (10) jeweils in Reihen auf der Trommel (9) angeordnet sind, wobei sie trommelseitig jeweils durch einen in eine Bohrung der Trommel (9) eingesetzten Rundbolzen (17) gehalten sind.

12. Maschinenanlage nach einem der Ansprüche 1 bis 11,
**dadurch gekennzeichnet, dass** das kammartige Gegenmesser (11) durch einen Scherbolzen (18) am Maschinengehäuse gehalten ist, der vorzugsweise so eingestellt ist, dass er bei einem Hindernis eher bricht als die Schlagmesser (10) und/oder das Gegenmesser.

## Claims

1. A machine arrangement for processing field crops, particularly beets, to a substrate, preferably for the production of bioenergy, comprising a first machine (1) for crushing field crops, particularly beets, consisting of a machine housing with, in the working position, an upper filling opening (3) and a lower dispensing opening (4), a driven crusher drum (5) rotatably arranged in the machine housing with a plurality of pusher dogs (6) projecting from the drum casing, a narrow gap (7) formed between the housing and the drum casing, into which the broken field crops are pressed by means of the pusher dogs (6) and are crushed, in the direction of rotation of the crusher drum (5) behind the gap (7) the dispensing opening (4) being provided, **characterized by** a second machine (2) being arranged adjacent to the dispensing opening (4), the second machine (2) serving for crushing the field crop pieces supplied from the first machine (1), for which purpose it has a machine housing with, in the working position, an upper filling opening and a lower dispensing opening (8), has a driven drum (9) rotatably arranged in the housing with a plurality of beat knives (10) radially projecting from its casing, said beat knives forming together with a comb-like counter-knife (11) arranged at an inner wall of the housing a field crop crushing unit, the dispensing opening (8) being provided adjacent to the counter-knife (11), in the direction of rotation of the drum (9).

2. The machine arrangement according to claim 1, **characterized in that** the first machine (1) is placed onto the second machine (2) and is connected therewith so to form a two-step functional unit.

3. The machine arrangement according to claim 1 or 2, **characterized in that** the crusher drum (5) of the first machine (1) is directly driven by means of an electric motor (12) and a spur gear transmission being in engagement with an end of a drive shaft of the crusher drum (5).

4. The machine arrangement according to one of claims 1 to 3, **characterized in that** the pusher dogs (6) are rigidly screwed onto the drum casing in an exchangeable manner.

5. The machine arrangement according to one of claims 1 to 4, **characterized in that** in order to form the narrow gap (7), a strip-like shaped body (13) having a roof-like outer contour is fixed or formed, one roof face of which forms a guide for the field crops directed toward the drum casing, and the other roof face of which is inclined away from the crusher drum (5), the ridge of the roof faces forming the gap (7) between the drum casing and the shaped body (13).

6. The machine arrangement according to one of claims 1 to 5, **characterized in that** at a bottom portion of the housing, in the direction of rotation of the crusher drum (5) adjacent to the gap (7), a scraper device (14) for stripping field crop material from the drum casing is arranged.

7. The machine arrangement according to claim 6, **characterized in that** the scraper device (14) is a preferably floatingly supported comb, the pitch of which is adapted to the arrangement of the pusher dogs (6) on the drum casing.

8. The machine arrangement according to one of claims 1 to 7, **characterized in that** the electric drive of the crusher drum (5) is coupled to a switching device that in case of excessive power consumption of the drive motor (12) switches to reversed direction of rotation, and is preferably coupled to a timer such that the reversed direction of rotation is limited in time and after expiration of the time is switched back to normal direction of rotation.

9. The machine arrangement according to one of claims 1 to 8, **characterized in that** on the housing approximately opposite to the gap (7), a pendulumtype flap (15) is provided, from which rocks or other disruptive parts can be ejected when the direction of rotation is reversed.

10. The machine arrangement according to one of claims 1 to 9, **characterized in that** the drum (9) of the second machine (2) is driven at high speed of rotation by a motor (16) having a V-belt drive.

11. The machine arrangement according to one of claims 1 to 10, **characterized in that** the beat knives (10) are respectively arranged in rows on the drum (9), and they are respectively held on the drum (9) by a round bolt (17) inserted in a bore of the drum (9).

12. The machine arrangement according to one of claims 1 to 11, **characterized in that** the comb-like counter knife (11) is held by a shear pin (18) at the machine housing, which shear pin is preferably adapted such that, when an obstacle is encountered, it will break earlier than the beat knives (10) and/or the counter knife.

## Revendications

1. Installation de machine pour le traitement de produits agricoles, en particulier de betteraves, pour obtenir un substrat, de préférence pour la production de bioénergie, comprenant une première machine (1) pour concasser des produits agricoles, en particulier des betteraves, consistant en un boîtier de machine avec, dans la position de fonctionnement, une ouverture de remplissage supérieure (3) et une ouverture de distribution inférieure (4), un tambour concasseur (5) entraîné et disposé de manière rotative dans le boîtier de machine avec une pluralité d'organes d'entraînement (6) en saillie de l'enveloppe du tambour, une fente (7) étroite formée entre le boîtier et l'enveloppe du tambour, dans laquelle les produits agricoles concassés sont pressés au moyen des organes d'entraînement (6) et sont écrasés, dans le sens de rotation du tambour concasseur (5) derrière la fente (7) l'ouverture de distribution (4) étant prévue, caractérisée en une deuxième machine (2) étant disposée voisine de l'ouverture de distribution (4), la deuxième machine (2) servant à concasser les pièces des produits agricoles fournies par la première machine (1), pour lequel but elle a un boîtier de machine avec, dans la position de fonctionnement, une ouverture de remplissage supérieure et une ouverture de distribution inférieure (8), un tambour (9) entraîné et disposé de manière rotative dans le boîtier avec une pluralité ce couteaux batteurs (10) en saillie radialement de son enveloppe, ces couteaux batteurs formant, ensemble avec un contre-couteau (11) en forme de peigne disposé à une paroi intérieure du boîtier, une unité de déchiquetage des produits agricoles, l'ouverture de distribution (8) étant prévue suivant au contre-couteau (11), dans le sens de rotation du tambour (9).

2. Installation de machine selon la revendication 1, **caractérisée en ce que** la première machine (1) est placée sur la deuxième machine (2) et est liée à celle-ci à former une unité fonctionnelle à deux étapes.

3. Installation de machine selon la revendication 1 ou 2, **caractérisée en ce que** le tambour concasseur (5) de la première machine (1) est directement entraîné au moyen d'un moteur électrique (12) et d'une transmission à roues droites s'engageant avec une extrémité d'un arbre d'entraînement du tambour concasseur (5).

4. Installation de machine selon une des revendications 1 à 3, **caractérisée en ce que** les organes d'entraînement (6) sont vissés rigidement sur l'enveloppe du tambour de manière remplaçable.

5. Installation de machine selon une des revendications 1 à 4, **caractérisée en ce que** pour former la fente (7) étroite, un corps façonné (13) en forme de baguette ayant un contour extérieur en forme de toit est fixé ou formé, une surface du toit formant un guidage pour les produits agricoles dans la direction vers l'enveloppe du tambour, et l'autre surface du toit étant inclinée loin du tambour concasseur (5), la faîte des surfaces du toit formant la fente (7) entre l'enveloppe du tambour et le corps façonné (13).

6. Installation de machine selon une des revendications 1 à 5, **caractérisée en ce qu'**à la partie de fond du boîtier, suivant à la fente (7), dans le sens de rotation du tambour concasseur (5), un dispositif racleur (14) pour racler les matières des produits agricoles loin de l'enveloppe du tambour est disposé.

7. Installation de machine selon la revendication 6, **caractérisée en ce que** le dispositif racleur (14) est une peigne de préférence maintenue de manière flottante, dont le pas est adapté à l'arrangement des organes d'entraînement (6) sur l'enveloppe du tambour.

8. Installation de machine selon une des revendications 1 à 7, **caractérisée en ce que** l'entraînement électrique du tambour concasseur (5) est couplé à un dispositif commutateur, qui en cas d'une consommation énergétique haute du moteur d'entraînement (12) commute au sens de rotation inversé, de préférence couplé à un dispositif de temporisation, de façon que le sens de rotation inversé soit limité en temps et après cette période de temps soit commuté en retour au sens de rotation normal.

9. Installation de machine selon une des revendications 1 à 8, **caractérisée en ce que** sur le boîtier environ en face de la fente (7), un clapet battant (15) est prévu, par lequel des pierres ou d'autres matières parasites peuvent être éjectées lors de l'inversion du sens de rotation.

10. Installation de machine selon une des revendications 1 à 9, **caractérisée en ce que** le tambour (9) de la deuxième machine (2) est entraîné à haute vitesse de rotation par un moteur (16) ayant un entraînement à courroie trapézoïdale.

11. Installation de machine selon une des revendications 1 à 10, **caractérisée en ce que** les couteaux batteurs (10) sont respectivement disposés en rangées sur le tambour (9), et ils sont respectivement maintenus sur le tambour par un boulon rond (17) inséré dans une forure du tambour (9).

12. Installation de machine selon une des revendications 1 à 11, **caractérisée en ce que** le contre-couteau (11) en forme de peigne est maintenu par un boulon de cisaillement (18) au boîtier de machine, qui est de préférence configuré de telle manière, s'il y a un obstacle, qu'il rompe plus tôt que les couteaux batteurs (10) et/ou le contre-couteau.
